Europäisches Patentamt

European Patent Office

Office européen des brevets

(11) Veröffentlichungsnummer: **0 328 737 B1**

# (12) EUROPÄISCHE PATENTSCHRIFT

(45) Veröffentlichungstag der Patentschrift: **18.03.92**

(21) Anmeldenummer: **88116424.8**

(22) Anmeldetag: **05.10.88**

(51) Int. Cl.⁵: **F16J 15/40**

(54) **Dichtung.**

(30) Priorität: **17.02.88 DE 3804844**

(43) Veröffentlichungstag der Anmeldung:
**23.08.89 Patentblatt 89/34**

(45) Bekanntmachung des Hinweises auf die
Patenterteilung:
**18.03.92 Patentblatt 92/12**

(84) Benannte Vertragsstaaten:
**AT BE CH DE ES FR GB IT LI NL SE**

(56) Entgegenhaltungen:

**PATENT ABSTRACTS OF JAPAN, Band 7, Nr.
9 (M-185)[1154], 14. Januar 1983; & JP-A-57
167 566 (HITACHI SEISAKUSHO K.K.)
15-10-1982**

**PATENT ABSTRACTS OF JAPAN, Band 7, Nr.
189 (M-237)[1334], 18. August 1983; & JP-A-58
91 968 (KOGYO GIJUTSUIN) 01-06-1983**

(73) Patentinhaber: **Firma Carl Freudenberg
Höhnerweg 2-4
W-6940 Weinheim/Bergstrasse(DE)**

(72) Erfinder: **Kilthau, Gerhard, Dr.
Ernst Taler Strasse 18
W-6800 Mannheim 51(DE)**
Erfinder: **Spies, Karl Heinrich, Dr.
Stettiner Strasse 14
W-6943 Birkenau(DE)**
Erfinder: **Vogt, Rolf
Plankstadter Strasse 15
W-6836 Oftersheim(DE)**
Erfinder: **Freiländer, Peter, Dr.
Suhlerweg 20
W-6800 Mannheim 31(DE)**
Erfinder: **Seethaler, Toni, Dr.
Am Wetzelsberg 57
W-6946 Gorxheimertal(DE)**

EP 0 328 737 B1

**Beschreibung**

Die Erfindung betrifft eine Dichtung für den Spalt zwischen zwei relativ verdrehbaren Maschinenteilen, bei der wenigstens eine der beiden einander zugewandten Oberflächen mit wenigstens einer eingetieften Gewinderille versehen ist, die eine in Richtung des abgedichteten Raumes weisende Förderwirkung hat und bei der der Gewinderille auf der von dem abgedichteten Raum abgewandten Seite eine ferrofluidische Vorschaltdichtung vorgelagert ist, die einen Ringmagneten oder einen damit verbundenen Polschuh umfaßt, mit einem radialen Abstand von der gegenüberliegenden Oberfläche, der mit einer ferrofluidischen Flüssigkeit gefüllt ist, wobei der Spalt eine radiale Weite hat, die mit dem radialen Abstand der die Gewinderillen voneinander trennenden Gewindestege von der gegenüberliegenden Oberfläche übereinstimmt und wobei die Gewinderillen und die Vorschaltdichtung einen axialen Abstand voneinander haben.

Eine solche Dichtung ist aus JP-A-57 167 566 bekannt. Der Bereich, in dem die Gewinderillen vorgesehen sind und der Ringmagnet sind dabei durch eine Lücke in axialer Richtung voneinander getrennt. Es wurde beobachtet, daß sich insbesondere bei häufigeren Betriebsunterbrechungen ein Verlust von Bestandteilen der ferrofluidischen Flüssigkeit ergibt. Hinsichtlich der erzielten Abdichtwirkung kann sich dadurch eine große Beeinträchtigung ergeben.

Der Erfindung liegt die Aufgabe zugrunde, eine solche Dichtung derart weiterzuentwickeln, daß Volumenverluste der ferrofluidischen Flüssigkeit nicht mehr auftreten.

Diese Aufgabe wird erfindungsgemäß bei einer Dichtung der eingangs genannten Art dadurch gelöst, daß der axiale Abstand durch einen Zylinderabschnitt überbrückt ist und daß der Zylinderabschnitt den selben radialen Abstand von der gegenüberliegenden Oberfläche aufweist, wie die Gewindestege und der Ringmagnet oder der Polschuh. Hierdurch wird die Entstehung turbulenter Strömungen im Bereich des Zylinderabschnittes vermieden und damit sogleich deren Einwirkung auf die ferrofluidische Flüssigkeit. Hinsichtlich der Vermeidung eines unerwünschten Volumenverlustes des Ferrofluids ist das von großem Vorteil. Die radiale Spaltweite im Bereich des Zylinderabschnittes liegt im allgemeinen zwischen 0,02 und 0,2 mm.

Um diese vorteilhafte Wirkung zu erzielen kann der Zylinderabschnitt ein Bestandteil eines die Gewinderillen aufweisenden Einsatzstückes bilden. Diese Ausgestaltung ist insbesondere im Hinblick auf eine einfache, wirtschaftliche Fertigung des Zylinderabschnittes von Vorteil.

Es ergibt sich im allgemeinen folgende Funktion: Bei Wellenstillstand kann das abzudichtende Medium, zumeist handelt es sich hierbei um ein Schmieröl, in die Gewinderillen eindringen und in einen unmittelbaren Berührungskontakt zu dem Ferrofluid gelangen. Beide Substanzen sind indessen ineinander unlöslich, wodurch eine gegenseitige Durchmischung ausgeschlossen ist. Das im Magnetfeld gehaltene Ferrofluid übernimmt beim Stillstand die statische Abdichtfunktion.

Bei drehender Welle tritt parallel zur ansteigenden Drehzahl zunehmend die in Richtung des abgedichteten Raumes weisende Förderwirkung der Gewinderillen in Erscheinung. Sie hat schließlich eine weitgehende Leerung der Gewinderillen von dem abzudichtenden Medium zur Folge.

Im Bereich des zwischen dem Ringmagneten und der relativ beweglichen Oberfläche angeordneten Ferrofluids sind keinerlei Gewinderillen vorhanden, sondern in diesem Bereich werden beide einander gegenüberliegenden Oberflächen durch Zylinderflächen gebildet. Auch bei drehender Welle ist daher weder eine gegenseitige Durchmischung des Ferrofluids mit dem abzudichtenden Medium noch eine nennenswerte Relativverlagerung des Ferrofluids zu befürchten.

Durch die Förderwirkung der Gewinderillen bedingt kann sich bei sehr hohen Drehzahlen im Bereich des Ferrafluids eine gewisse Sogwirkung in Richtung des abgedichteten Raumes ergeben. Dieser vermag das Ferrofluid bis zum Erreichen eines relativ hohen Vakuums ohne nennenswerte Lageveränderung standzuhalten, bis ein impulsartig kurzes Abheben des Ferrofluids von der relativ verdrehbaren, gegenüberliegenden Oberfläche erfolgt und einen Druckausgleich bewirkt. Unmittelbar anschließend wird der durchgehende Berührungskantakt zwischen dem Ferrafluid und der gegenüberliegenden Oberfläche wieder hergestellt. Der abzudichtende Raum ist damit wiederum hermetisch abgeschlossen, Fremdstaffe vermögen in ihn nicht mehr einzudringen.

Es wurde gefunden, daß auch während der vorstehend beschriebenen, zeitlich äußerst kurzen Öffnungsbewegung des Ferrofluids Fremdstoffe in den Bereich des abzudichtenden Raumes so gut wie gar nicht eindringen. Das dürfte darauf zurückzuführen sein, daß die Öffnungsbewegung des Ferrofluids neben ihrer äußerst kurzen Zeitdauer im allgemeinen nur einen sehr kleinen Segmentausschnitt des ansonsten ringförmig ausgebildeten Ferrafluids erfaßt und sich auf ein Abheben des Ferrofluids von der dem Ringmagneten gegenüberliegenden Oberfläche beschränkt. Die Dichtung kann daher als bisher unerreicht zuverlässig angesehen werden. Sie verhindert in gleicher Weise auch das unerwünschte Austreten abzudichtenden Mediums oder von Dämpfen desselben in die Umgebung. Eine Verwendung im Bereich elektronischer Anlagen oder im Bereich der Medizintechnik ist dadurch problemlos möglich.

Ein wesentlicher Vorteil der erfindungsgemäßen Dichtung besteht darin, daß diese durch den Wegfall aufeinandergleitender Flächen völlig frei von Verschleiß- und Reibungsverlusten langfristig ein gleich gutes Abdichtungsergebnis gewährleistet. Auch Kontrollen hinsichtlich der noch verfügbaren Abdichtungskapazität können sich daher erübrigen.

Die Spaltenlänge im Bereich des Zylinderabschnittes liegt bei gebräuchlichen Dimensionierungen der Dichtung zwischen 0,5 und 5,7 mm. Sie läßt sich allgemein nach der folgenden Formel errechen:

$$\text{Spaltenlänge} \geq \frac{D^2 - d^2}{(D + d \cdot 0,07)}$$

worin D den Gehäuse- und d den Wellendurchmesser im Bereich des Zylinderabschnittes beschreiben.

Das durch die Gewinderillen gebildete Fördergewinde soll so ausgelegt sein, daß der sich bei drehender Welle ergebende Unterdruck die Druckhaltefähigkeit der Ferrofluiddichtung nicht mehr als 0,05 bar überschreitet. Die sich während der Öffnungsbewegung des Ferrofluids in seinem Bereich ergebe Luftströmung ist dementsprechend von sehr geringer Geschwindigkeit, was es ausschließt, daß Ferrofluidtröpfchen durch die Luftströmung aus dem aus Ferrofluid bestehenden Flüssigkeitsring herausgerissen und in den abgedichteten Raum befördert werden und verloren gehen. Die Einhaltung des genannten Merkmales hat somit eine gewisse Bedeutung für die Funktionsdauer der erfindungsgemäßen Dichtung.

Der Gegenstand der vorliegenden Erfindung wird nachfolgend anhand der als Anlage beigefügten Zeichnung weiter erläutert. Diese gibt die einzelnen Varianten in halbgeschnittener Darstellung wieder. Es zeigen im einzelnen:

Fig. 1     eine Wellendichtung der erfindungsgemäßen Art, bei der der Ringmagnet und die Gewinderillen die zylindrisch ausgebildete Welle außenseitig umschließen;

Fig. 2     eine Kassettendichtung zur Verwendung im Ringspalt zwischen einer umlaufenden Welle und dem zugehörigen Gehäuse, bei der die relativ verdrehbaren Oberflächen aus integrierten Teilen der Kassettendichtung bestehen;

Fig. 3     eine Ausführung ähnlich derjenigen Fig. 2, bei der wesentliche Teile der Kassettendichtung aus Kunststoff erzeugt sind;

Fig. 4     zwei Dichtungen ähnlich der Ausführung nach Fig. 1 in einer gegenseitigen, spiegelbildlichen Zuordnung;

Fig. 5     zwei weitere Dichtungen ähnlich der Ausführung nach Fig. 1, die einander spiegelbildlich zugeordnet sind und in bezug auf die beiderseitige Abdichtung eines Kugellagers zur Anwendung gelangen.

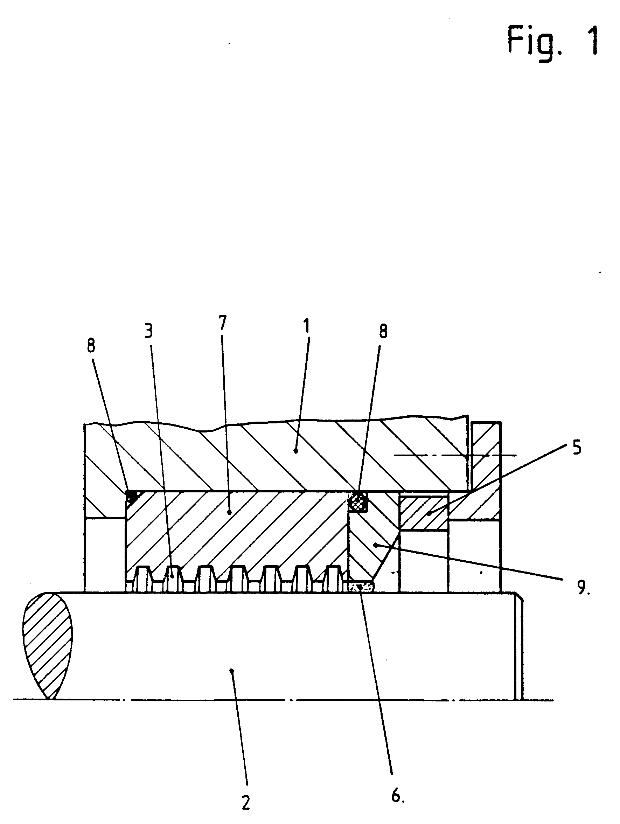

Die in Fig. 1 gezeigte Dichtung dient der Abdichtung des Spaltes zwischen einer Gehäusewandung 1 und der diese in einem radialen Abstand durchdringenden Welle 2. Sie besteht im wesentlichen aus einem Einsatzstück 7, welches innenseitig mit einer zylindrischen Bohrung und darin eingearbeiteten Gewindegängen versehen ist.

Das Einsatzstück 7 ist durch O-Ringe 8 gegenüber der Gehäusewandung 1 und gegenüber dem Polschuh 9 abgedichtet, der innenseitig von einer zylindrischen Bohrung durchdrungen ist. Der Durchmesser dieser Bohrung ist ebenso groß wie der Innendurchmesser der Bohrung des Einsatzstückes 7. Der Polschuh 9 besteht bei einer kreisringförmigen Gestalt aus einem magnetisierbaren Werkstoff. Er liegt an der Stirnfläche des Ringmagneten 5 an.

In dem Ringspalt zwischen dem Polschuh 9 und der Oberfläche der aus Stahl bestehenden, abzudichtenden Welle 2 ist ein Ferrofluid angeordnet. Er wird in dieser Position durch das dort befindliche Magnetfeld fixiert. Die Gewinderillen 3 enden in einem axialen Abstand von dem Polschuh 9. Zur Funktion ist folgendes auszuführen:

Bei stillstehender Welle 2 dringt abzudichtendes Medium, hierbei handelt es sich zumeist um Öl, aus dem abzudichtenden Raum 4 in die Gewinderillen 3 ein und gelangt bis in den unmittelbaren Bereich des in dem Spalt 6 befindlichen Ferrofluids.

Bei sich drehender Welle 2 ergibt sich eine in Richtung des abzudichtenden Raumes 4 wirksame Schleppströmung an der Oberfläche der abzudichtenden Welle 2, welche eine allmähliche Entleerung der Gewinderillen 3 von abzudichtendem Medium zur Folge hat. Diese wirkt sich auf das Ferrofluid im Spalt 6 nicht aus, weil in diesem Bereich keinerlei Gewinderillen vorhanden sind und der Innendurchmesser des Polschuhes 9 mit demjenigen des Einsatzstückes 7 übereinstimmt.

3

Bei sehr großen Wellendrehzahlen kann es zum Aufbau eines gewissen Vakuums im Ringspalt zwischen dem Einsatzstück 7 und der Oberfläche der abzudichtenden Welle 2 kommen. Übersteigt dieses einen kritischem Wert, so kann sich ein kurzfristiges Aufklappen des im Spalt 6 befindlichen Ferrofluids ergeben und als Folge hiervon ein Ausgleich des zuvor vorhandenen Vakuums. Unmittelbar anschließend nimmt das Ferrofluid seine ursprüngliche, kreisringförmige Gestalt wieder an, die durch einen durchgehenden Berührungskontakt mit den einander gegenüberliegenden Oberflächen des Polschuhes 9 und der Welle 2 gekennzeichnet ist. Das Eindringen von Fremdstoffen ist dadurch ausgeschlossen.

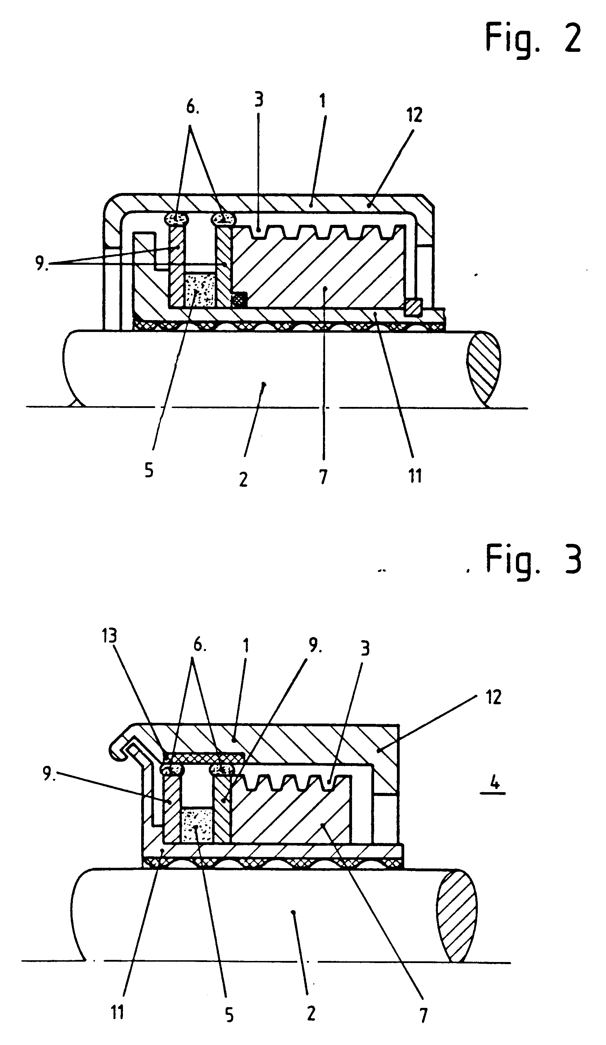

In den Fig. 2 und 3 sind Kassettendichtungen mit einer im wesentlichen übereinstimmenden Wirkungsweise wiedergegeben. Die relativ verdrehbaren und gegeneinander abzudichtenden Maschinenteile bestehen in diesen Fällen aus integrierten Bestandteilen der Kassettendichtungen, nämlich den Innenringen 11 und den Außenringen 12. Diese sind unverlierbar aneinander festgelegt.

In beiden Fällen ist relativ unverdrehbar und flüssigkeitsdicht auf den Innenringen 11 das Einsatzstück 7 festgelegt, welches außenseitig durch eine Zylinderfläche begrenzt ist sowie durch eine in die Zylinderfläche eingreifende Gewinderille 3, die bei sich drehender Welle 2 eine in Richtung des abgedichteten Raumes 4 weisende Förderrichtung hat. Auf der von dem abgedichteten Raum 4 abgewandten Seite schließt sich an das Einsatzstück 7 jeweils eine Ferrofluiddichtungseinheit an, umfassend einen Ringmagneten 5 und an dessen beiderseitigen Stirnflächen angepreßte Polschuhe 9, die einen mit dem Einsatzstück 7 übereinstimmenden Außendurchmesser haben und dem Außenring 12 in entsprechend dichter Weise angenähert sind. Der Außenring 12 besteht im Falle der Ausführung nach Fig. 2 aus Stahlblech, im Falle der Ausführung nach Fig. 3 aus Kunststoff, wobei im Bereich der axialen Überlappung mit den Polschuhen 9 und dem Ringmagneten 5 eine Ringeinlage 13 aus Stahlblech vorgesehen ist. Hierdurch werden die radialen Spalte zwischen den Polschuhen 9 und den radial gegenüberliegenden Teilen der Außenringe 12 durch ein stabiles Magnetfeld überbrückt, das geeignet ist, die räumliche Lage des enthaltenen Ferrofluids zu stabilisieren. Die Innenringe 11 sind in beiden Fällen durch eine Schicht aus gummielastischem Werkstoff unverdrehbar an der Oberfläche der abzudichtenden Welle 2 festgelegt. Sie werden zugleich durch dieselbe Schicht gegenüber der Oberfläche abgedichtet.

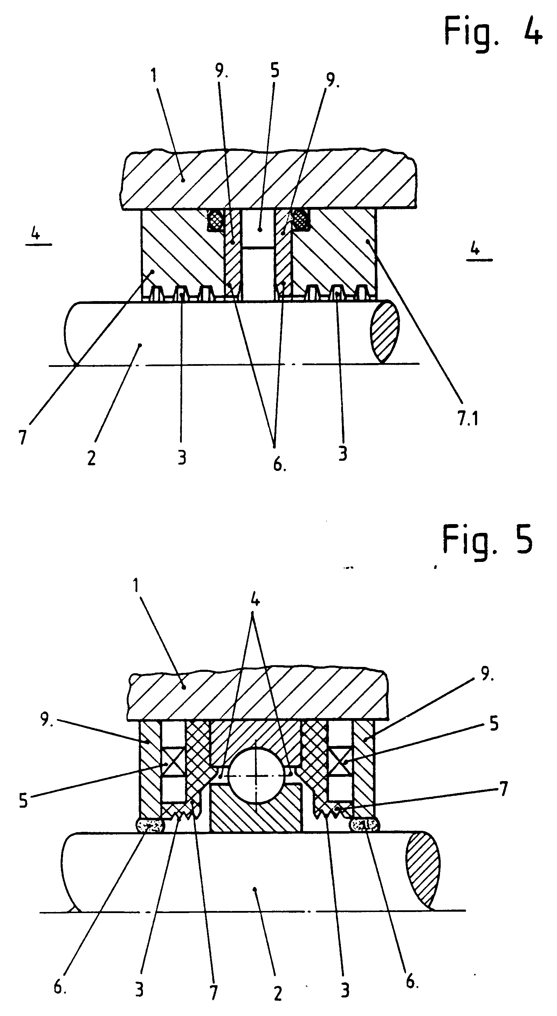

In Fig. 4 ist eine Ausführung wiedergegeben, umfassend zwei Ausführungen ähnlich der in Fig. 1 gezeigten Art in gegenseitiger, spiegelbildlicher Zuordnung. Die Ausführung ist besonders geeignet für Anwendungsfälle, in denen zwei Räume 4 in hermetischer Weise voneinander abzuschließen sind. Die Förderrichtung des im linken Teil gezeigten Einsatzstückes 7 muß folglich nach links gerichtet sein, diejenige des in der Darstellung rechts gezeichneten Einsatzstückes 7.1 nach rechts gerichtet. Die Gewinderillen 3 sind dementsprechend zu gestalten. Sie sind von der innenseitigen Zylinderfläche der Polschuhe 9 durch einen zylindrischen Abschnitt von identischem Innendurchmesser getrennt.

Fig. 5 zeigt eine Ausführung ähnlich Fig. 4, die bei der Abdichtung eines Kugellagers zur Anwendung gelangt. Der abzudichtende Raum 4 besteht dabei aus den Zwischenräumen zwischen den einzelnen Kugeln. Er ist mit Fett gefüllt, welches einen besonders leichten Lauf der Kugeln gewährleisten soll. Die Förderrichtung der Gewinderillen 3 der beiden Einsatzstücke 7 muß folglich entgegen der Ausführung nach Fig. 4 nach innen weisen. Die Polschuhe 9 der Ringmagneten 5 sind dementsprechend auf der Außenseite der Gesamtanordnung vorgesehen.

**Patentansprüche**

1. Dichtung für den Spalt (6) zwischen zwei relativ verdrehbaren Maschinenteilen (1,2), bei der wenigstens eine der beiden einander zugewandten Oberflächen mit wenigstens einer eingetieften Gewinderille (3) versehen ist, die eine in Richtung des abgedichteten Raumes weisende Förderwirkung hat und bei der der Gewinderille (3) auf der von dem abgedichteten Raum abgewandten Seite eine ferrofluidische Vorschaltdichtung vorgelagert ist, die einen Ringmagneten (5) oder einen damit verbundenen Polschuh (9) umfaßt, mit einem radialen Abstand von der gegenüberliegenden Oberfläche, der mit einer ferrofluidischen Flüssigkeit gefüllt ist, wobei der Spalt (6) eine radiale Weite hat, die mit dem radialen Abstand der die Gewinderillen (3) voneinander trennenden Gewindestege von der gegenüberliegenden Oberfläche übereinstimmt und wobei die Gewinderillen (3) und die Vorschaltdichtung einen axialen Abstand voneinander haben, dadurch gekennzeichnet, daß der axiale Abstand durch einen Zylinderabschnitt überbrückt ist und daß der Zylinderabschnitt den selben radialen Abstand von der gegenüberliegenden Oberfläche aufweist wie die Gewindestege und der Ringmagnet (5) oder der Polschuh (9).

2. Dichtung nach Anspruch 1, dadurch gekennzeichnet, daß der Zylinderabschnitt einen Bestandteil eines die Gewinderillen (3) aufweisenden Einsatzstückes (7) bildet.

## Claims

1. A seal for the gap (6) between two relatively rotatable machine parts (1, 2), in which seal at least one of the two mutually facing surfaces is provided with at least one cut-in thread groove (3), which has a conveying effect acting in the direction of the sealed-off space, and in which seal there is mounted upstream of the thread groove (3), on the side facing away from the sealed-off space, a ferrofluidic advance seal which comprises an annular magnet (5) or a pole shoe (9) associated therewith, with a radial spacing from the opposite surface, which spacing is filled with a ferrofluidic fluid, the gap (6) having a radial width which corresponds to the radial spacing of the thread webs, separating the thread grooves (3) from one another, from the opposite surface, and the thread grooves (3) and the advance seal having an axial spacing from one another, characterised in that the axial spacing is bridged by a cylindrical portion, and in that the cylindrical portion has the same radial spacing from the opposite surface as the thread webs and the annular magnet (5) or the pole shoe (9).

2. A seal according to claim 1, characterised in that the cylindrical portion forms a constituent of an insert piece (7) exhibiting the thread grooves (3).

## Revendications

1. Joint pour l'interstice (6) entre deux organes de machine (1,2) pouvant tourner l'un par rapport à l'autre, pour lequel au moins une des deux surfaces mutuellement opposées face à face est munie d'une gorge de filet (3) ayant pour effet de débiter dans la direction de l'espace rendu étanche et pour lequel un joint ferro-fluidique est placé en amont du côté opposé à l'espace étanche, ledit joint ferro-fluidique comprenant un aimant annulaire (5) ou une pièce polaire (9) y reliée, avec un espacement radial par rapport à la surface opposée, lequel étant rempli avec un fluide ferro-fluidique, ledit interstice (6) ayant une largeur radiale qui correspond à l'espacement radial entre les parties saillantes séparant lesdites gorges du filet (3) et la surface opposée et lesdites gorges de filet (3) et ledit joint ferro-fluidique ayant entre eux un espacement axial, caractérisé en ce que ledit espacement axial est ponté par un tronçon cylindrique, et en ce que ledit tronçon cylindrique a le même espacement radial par rapport à la surface opposée que lesdites parties saillantes du filet, ledit aimant annulaire (5) ou ladite pièce polaire (9).

2. Joint selon la revendication 1, caractérisé en ce que le tronçon cylindrique constitue une partie intégrante d'une pièce d'insertion (7) comprenant les gorges de filet (3).

Fig. 1

**Fig. 2**

**Fig. 3**

# Fig. 4

# Fig. 5